# EUROPEAN PATENT APPLICATION

(11) **EP 4 756 091 A1**
(43) Date of publication of application: **10.06.2026**
(21) Application number: 25220789.9
(22) Date of filing: 04.12.2025
(51) Int. Cl.: D04H 1/4274, B32B 5/02, D01G 11/00, D04H 1/4374, D04H 1/58, D04H 1/732, D04H 1/736, A41D 3/02

(54) **METHOD OF MANUFACTURING FABRIC FOR CLOTHES AND FABRIC FOR CLOTHES**

(30) Priority: 05.12.2024 JP 2024211970
(71) Applicant: Seiko Epson Corporation, Tokyo 160-8801 (JP)
(72) Inventor: MIYAJIMA, Yoshitaka, Suwa-shi, 392-8502 (JP); SASAKI, Tsuneyuki, Suwa-shi, 392-8502 (JP); SONOYAMA, Takuya, Suwa-shi, 392-8502 (JP); IGARASHI, Hitoshi, Suwa-shi, 392-8502 (JP)
(74) Representative: Lewis Silkin LLP

(57) **Abstract**

A method of manufacturing a fabric for clothes includes a defibrating step of defibrating a raw material in a dry condition to produce fibers, a mixing step of mixing an additive with the fibers obtained in the defibrating step to produce a mixture, an accumulation step of accumulating the mixture in air on a fabric to be a first layer having air permeability to produce a web to be a second layer, a forming step of stacking the fabric and the web and forming by heating and pressurizing, an attaching step of attaching a fabric to be a third layer to at least one of the first layer and the second layer, and a coating step of coating the third layer with a treatment agent for improving a warmth retaining property.

## Description

The present application is based on, and claims priority from JP Application Serial Number 2024-211970, filed December 5, 2024, the disclosure of which is hereby incorporated by reference herein in its entirety.

### BACKGROUND

### 1. Technical Field

The present disclosure relates to a method of manufacturing a fabric for clothes and a fabric for clothes.

### 2. Related Art

In recent years, in order to solve problems such as depletion of resources and an increase of waste, mechanisms and techniques for reusing used clothes have been studied. For example, JP-A-2023-111178 discloses a technique for manufacturing a fiber sheet by defibrating a fabric in a dry condition.

JP-A-2023-111178 is an example of the related art.

However, when the technique described in JP-A-2023-111178 is applied to the manufacture of the fabric for clothes, there is a problem that it is difficult to change a warmth retaining property of the fabric to be manufactured. The clothes are required to have different heat retaining properties depending on the intended use. In the above technique, adjustment of the warmth retaining property is not mentioned in the fiber sheet to be manufactured. That is, there has been a demand for a method of manufacturing a fabric for clothes with adjustment of the warmth retaining property.

### SUMMARY

A method of manufacturing a fabric for clothes includes a defibrating step of defibrating a fabric in a dry condition to produce fibers, a mixing step of mixing an additive with the fibers obtained in the defibrating step to produce a mixture, an accumulation step of accumulating the mixture in air on a fabric to be a first layer having air permeability to produce a web to be a second layer, a forming step of stacking the fabric to be the first layer and the web and forming by heating and pressurizing, an attaching step of attaching a fabric to be a third layer to at least one of the first layer and the second layer, and a coating step of coating the third layer with a treatment agent for improving a warmth retaining property.

A fabric for clothes includes a first layer having air permeability, a second layer formed of a web in which a mixture containing fibers obtained by defibrating a fabric in a dry condition and an additive is accumulated in air, and a third layer attached to at least one of the first layer and the second layer and coated with a treatment agent for improving an warmth retaining property.

### BRIEF DESCRIPTION OF THE DRAWINGS

FIG. 1 is a schematic cross-sectional view showing a configuration of a fabric for clothes according to an embodiment.
FIG. 2 is a schematic cross-sectional view showing another embodiment of the fabric for clothes.
FIG. 3 is a schematic cross-sectional view showing another embodiment of the fabric for clothes.
FIG. 4 is a flowchart showing a method of manufacturing the fabric for clothes.
FIG. 5 is a schematic diagram showing a configuration of a fabric manufacturing apparatus used for manufacturing the fabric for clothes.

### DESCRIPTION OF EMBODIMENTS

In the embodiments described below, a fabric for clothes having a multilayer structure and a method of manufacturing the fabric will be exemplified and described with reference to the drawings. In each of the following drawings, X, Y, and Z axes are shown as coordinate axes orthogonal to one another as necessary, a direction indicated by an arrow is referred to as a + direction, and a direction opposite to the + direction is referred to as a - direction. The Z axis is a virtual axis along a vertical direction, a +Z direction is an upward direction, and a -Z direction is a downward direction. For convenience of illustration, a size of each member is different from an actual size.

### 1. Fabric for clothes

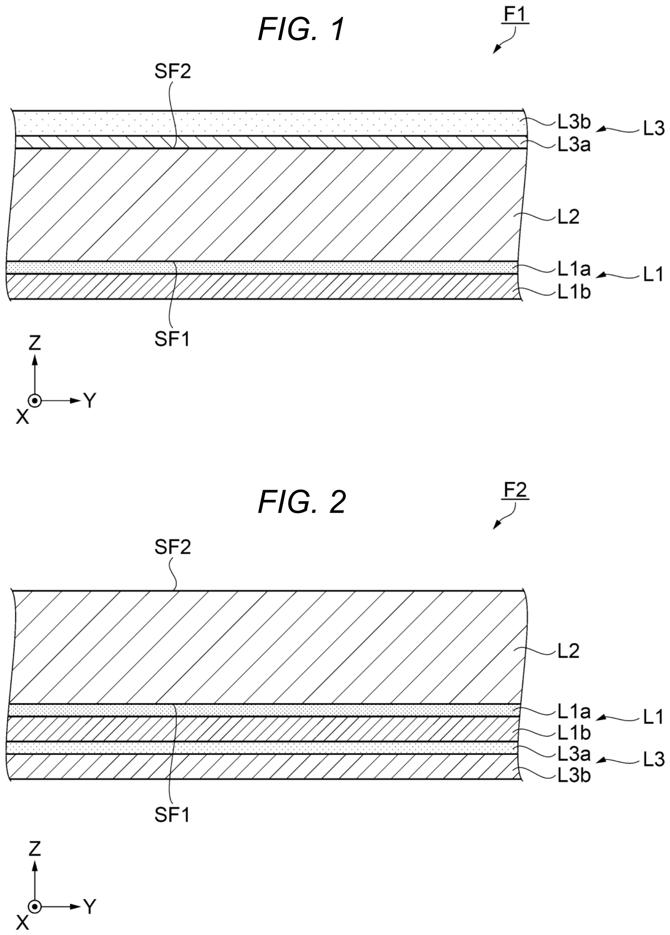

As shown in FIG. 1, a fabric for clothes F1 according to the present embodiment has a multilayer structure including a first layer L1, a second layer L2, and a third layer L3. The fabric for clothes F1 is an example of the fabric for clothes of the present disclosure, and is manufactured by a method of manufacturing a fabric for clothes described later. The fabric for clothes F1 is suitable for, for example, an overcoat because the warmth retaining property is improved.

The first layer L1 includes a base material layer L1b and an adhesive layer L1a. The third layer L3 includes a base material layer L3b and an adhesive layer L3a. In the fabric for clothes F1, the base material layer L1b of the first layer L1, the adhesive layer L1a of the first layer L1, the second layer L2, the adhesive layer L3a of the third layer L3, and the base material layer L3b of the third layer L are stacked in this order from the bottom to the top. When the fabric for clothes F1 is processed into clothes, it is preferable to use the third layer L3 on the outer side of the clothes from the viewpoint of warmth retaining property and air permeability of the clothes.

The thickness of the fabric for clothes F1 is appropriately set according to the intended use and form of the clothes to apply. The thickness of the fabric for clothes F1 is not particularly limited, but is, for example, from 0.30 mm to 2.00 mm. This improves the flexibility and strength in the fabric for clothes F1. Further, since the first layer L1 and the third layer L3 are stacked on the second layer L2, the strength of the fabric for clothes F1 is ensured with the smaller thickness of the second layer L2. In the present specification, the thickness refers to a dimension in a direction in which the first layer L1, the second layer L2, and the third layer L3 are stacked, that is, in a direction along the Z axis.

The first layer L1 has air permeability. When the third layer L3 is used on the outer side of the clothes, that is, when the first layer L1 is used at the human body side on the inner side of the clothes, steamy clothes in wearing is suppressed, and the comfort is improved. Further, in the manufacture of the fabric for clothes F1, the air permeability of the first layer L1 can be used to promote the accumulation of fibers and the like to be the second layer L2 on the first layer L1. Specifically, formation of a web containing the fibers is promoted by suctioning the air in which the fibers and the like are dispersed through the first layer L1. The method and process of manufacturing the fabric for clothes F1 will be described later in the section of the method of manufacturing a fabric for clothes.

In the present specification, the air permeability is defined by the amount of air passing through a test piece according to JIS air permeability test (L1096 2010 8.26.1 Method A). In the present specification, having air permeability means that the air amount obtained by the test method is 10 cm³/cm²·sec or more.

The thickness of the first layer L1 is not particularly limited, but is preferably, for example, from 0.01 mm to 0.20 mm. This improves the flexibility and the strength of the fabric for clothes F1.

The base material layer L1b has air permeability. The base material layer L1b is one surface of the fabric for clothes F1. The base material layer L1b is a sheet such as a woven fabric, a knitted fabric, or a nonwoven fabric containing polyester. According to the configuration, polyester is relatively excellent in strength, and thus the thinness and the strength of the fabric for clothes F1 can be improved.

The base material layer L1b is not limited to that made of polyester, but may be a sheet containing polyester and another resin, a sheet made of a resin other than polyester, or the like.

The adhesive layer L1a is interposed between the base material layer L1b and the second layer L2. The first layer L1 and the second layer L2 are bonded by the adhesive layer L1a, and the adhesive strength between the first layer L1 and the second layer L2 is ensured.

The adhesive layer L1a includes an adhesive agent. Examples of the material of the adhesive agent include known adhesive materials such as polyester resins, acrylic resins, silicone resins, and urethane resins, and known adhesive agents such as epoxy-based, acrylic-based, cyanoacrylate-based, urethane-based, and vinyl acetate-based adhesive agents. The adhesive agent of the adhesive layer L1a may be cured by heat applied in a forming step of the manufacturing process of the fabric for clothes F1 described later.

The adhesive layer L1a also has air permeability. Specifically, the adhesive layer L1a is formed so as not to impair the air permeability of the first layer L1. Examples of the form of the adhesive layer L1a include a form in which the above-described adhesive material, adhesive agent, or the like is applied in a planar mesh shape, and a form having a plurality of holes penetrating in the direction along the Z axis.

The adhesive layer L1a is not an essential component, and the first layer L1 may include only the base material layer L1b. In this case, the first layer L1 and the second layer L2 are bonded by the binding action of an additive contained in the second layer L2.

The first layer L1 may be colored. The base material layer L1b and the adhesive layer L1a generally have a white-based color when formed of the above-described materials. When the second layer L2 is colored, the colors of the first layer L1 and the second layer L2 are relatively greatly different. In this case, when the fabric for clothes F1 is processed into clothes, a difference in color between the first layer L1 and the second layer L2 is noticeable. In contrast, when the first layer L1 is colored in a color close to that of the second layer L2, the difference in color can be made less noticeable when processed into clothes.

When the first layer L1 is used on the outer side of the clothes, the design of the clothes is improved by coloring the first layer L1.

A known method such as digital printing including an inkjet method or analog printing can be applied to the coloring of the first layer L1. The coloring of the first layer L1 may be performed in advance in the manufacturing stage of a fabric to be the first layer L1, or may be performed in the manufacturing process of the fabric for clothes F1.

The second layer L2 is a nonwoven fabric and contains a plurality of fibers obtained by defibrating a fabric or the like and an additive such as a binder. The second layer L2 is formed of a web in which a plurality of fibers and the like are accumulated in the air. In the following description, the plurality of defibrated fibers may be simply referred to as fibers. Although the details will be described later, a defibrating step for obtaining fibers is performed in a dry condition. In the present specification, the dry condition refers to a treatment performed not in a liquid such as water but in air such as an atmosphere.

The fiber is one of the main components of the second layer L2 and affects the physical properties such as the mechanical strength of the second layer L2 together with the binder. From the viewpoint of resource circulation, it is preferable to use fibers obtained by defibrating old clothes or the like. Examples of the type of the fabric include a knitted fabric, a plain-woven fabric, and a pile fabric. The fabric may include a nonwoven fabric.

Here, when old clothes or the like are used as the material of the fibers, fibers of various materials may be mixed in the second layer L2. The warmth retaining property of the second layer L2 to be formed may change depending on the material and the form of the fibers. That is, in the related art, it is difficult to adjust the warmth retaining property in the second layer L2. Further, as described above, since the first layer L1 has air permeability, it is also difficult to adjust the warmth retaining property in the first layer L1. In contrast, the fabric for clothes F1 can adjust the warmth retaining property by the third layer L3 coated with a treatment agent.

The warmth retaining property of the fabric for clothes F1 may be adjusted by changing the thickness or density of the second layer L2 in addition to the adjustment in the third layer L3. When the thickness or density of the second layer L2 is changed, the volume of the voids contained in the second layer L2 changes, and the warmth retaining property is easily adjusted.

Examples of the fibers include fiber materials derived from natural products such as cotton, hemp, wool, silk, and regenerated cellulose, and synthetic fibers such as polypropylene, polyester, and polyurethane.

One of these fibers is used alone, or two or more of these fibers are used in combination. In particular, among the above fiber materials, the fabric preferably contains cotton or wool from the viewpoint of availability of old clothes and physical properties of fibers.

The weighted average fiber length of the defibrated fibers is preferably from 0.5 mm to 2.0 mm. According to the configuration, since the fibers are not excessively shortened, the fibers are appropriately entangled with each other, and the mechanical strength of the second layer L2 is improved. The weighted average fiber length is determined by a method according to ISO 16065-2:2007.

The fibers of the second layer L2 are preferably white fibers in consideration of reusing the clothes processed from the fabric for clothes F1. The fibers are not limited to white fibers, and may include fibers dyed with a dye in advance. Further, the second layer L2 preferably contains no coloring material such as a pigment. The phrase "contains no coloring material" means "contains no coloring material intentionally added". The second layer L2 may contain a coloring material such as pigment particles unintentionally mixed.

The basis weight of the second layer L2 is preferably from 100 g/m² to 180 g/m². The basis weight is the number of grams per square meter of the area of the surface along the XY plane in one fabric for clothes F1. When the basis weight of the second layer L2 is within the above range, the balance between the thinness and the strength is good in the second layer L2. The basis weight of the second layer L2 is adjusted by the accumulation amount of the web formed in an accumulation step in the manufacture of the fabric for clothes F1, that is, the thickness of the web.

The thickness of the second layer L2 is not particularly limited, but is preferably, for example, from 0.20 mm to 0.80 mm. This improves the flexibility and the strength of the fabric for clothes F1. The thickness of the second layer L2 is adjusted not only by the thickness of the web described above, but also the pressing conditions of the web and the like in the forming step in the manufacture of the fabric for clothes F1.

The binder binds the fibers in the second layer L2. A thermoplastic or thermosetting resin is used as the binder. Examples of the resin include not only thermoplastic synthetic resins such as polyester, but also natural resins such as shellac, pine resin, dammar resin, polylactic acid, plant-derived polybutylene succinate, plant-derived polyethylene, and PHBH (registered trademark) (Poly (3-hydroxybutyrate-co-3-hydroxyhexanoate)) manufactured by Kaneka Corporation. As the binder, one kind thereof is used alone, or two or more kinds thereof are used in combination.

Examples of the additive other than the binder include a flame retardant, an antioxidant, an ultraviolet absorber, an aggregation inhibitor, an antibacterial agent, an antifungal agent, a wax, and a release agent.

In the second layer L2, a first surface SF1 in contact with the first layer L1 or a second surface SF2 in contact with the third layer L3 may be subjected to pretreatment such as surface treatment. The surface treatment improves various physical properties such as abrasion resistance. The surface treatment is performed in the manufacturing process of the fabric for clothes F1.

The surface treatment is not particularly limited, and examples thereof include softening treatment, water repellent treatment, wrinkle prevention treatment, and abrasion resistance treatment. Known fiber treatment agents and the like can be applied to these surface treatments.

The third layer L3 is attached to the second layer L2 side, which is one of the first layer L1 and the second layer L2. The third layer L3 is coated with a treatment agent for improving the warmth retaining property of the fabric for clothes F1. Thus, the third layer L3 has the warmth retaining property in the fabric for clothes F1. When the third layer L3 is used on the outside of the clothes, the warmth retaining property in wearing is improved. The third layer L3 is not limited to that attached to the second layer L2 side, and may be attached to at least one of the first layer L1 and the second layer L2.

Here, the warmth retaining property in the present specification is a general term for a heat insulating property, a sealing property, a heat storage property, and the like. Specifically, the warmth retaining property is a property of suppressing a decrease in temperature at the human body side due to a decrease in temperature of the outside world or preventing heat at the human body side from escaping to the outside world when the clothes processed from the fabric for clothes of the present disclosure is worn.

The thickness of the third layer L3 is not particularly limited, but is preferably, for example, from 0.01 mm to 1.00 mm. This improves the flexibility and the strength of the fabric for clothes F1.

The base material layer L3b is the other surface of the fabric for clothes F1. The base material layer L3b is a sheet such as a woven fabric, a knitted fabric, or a nonwoven fabric containing polyester. According to the configuration, polyester is relatively excellent in strength, and thus the thinness and the strength of the fabric for clothes F1 can be improved.

The base material layer L3b is not limited to that made of polyester, but may be a sheet containing polyester and another resin, a sheet made of a resin other than polyester, or the like.

The adhesive layer L3a is interposed between the base material layer L3b and the second layer L2. The third layer L3 and the second layer L2 are bonded by the adhesive layer L3a, and the adhesive strength between the third layer L3 and the second layer L2 is ensured. The adhesive layer L3a includes an adhesive agent. The same material as that of the adhesive layer L1a of the first layer L1 can be applied to the material of the adhesive agent.

The adhesive layer L3a is not an essential component, and the third layer L3 may include only the base material layer L3b. In this case, the third layer L3 and the second layer L2 are bonded by the binding action of the additive contained in the second layer L2.

The base material layer L3b is coated with a treatment agent for improving the warmth retaining property. The treatment agent is not particularly limited as long as the agent improves the warmth retaining property, and known agents can be applied. Specific examples of the treatment agent include a treatment agent for improving the sealing property by forming a resin coating on the surface, and a treatment agent for alleviates a decrease in temperature at the human body side with respect to the outside world by using latent heat.

The third layer L3 is coated with the treatment agent in the manufacturing process of the fabric for clothes F1. As will be described in detail later, the surface of the base material layer L3b opposite to the adhesive layer L3a is coated with the treatment agent. Therefore, when processed into clothes, the fabric for clothes F1 is preferably disposed such that the surface of the base material layer L3b faces the outside world.

The third layer L3 may be colored from the same viewpoint as the coloring of the first layer L1. The coloring of the third layer L3 may be performed at the stage of the fabric to be the third layer L3, or may be performed in the manufacturing process of the fabric for clothes F1. In the present embodiment, after the third layer L3 is coated with the treatment agent, the coloring is performed from the surface of the base material layer L3b. According to the configuration, since the coloring is applied to the surface of the coating layer formed by the treatment agent, the color developing property is improved.

When the third layer L3 is used on the outer side of the clothes, the design of the clothes is improved by the coloring. The coloring referred to here includes forming an image such as a text, a pattern, a picture, or a photograph by printing or the like in addition to coloring with a single color. The above-described method for the first layer L1 is applicable to the coloring of the third layer L3.

The fabric for clothes of the present disclosure may have a form different from the fabric for clothes F1. Fabrics for clothes F2 and F3 exemplified below are examples of the fabric for clothes of the present disclosure. The fabrics for clothes F2 and F3 are different from the fabric for clothes F1 in the arrangement of the third layer L3. In the description of the fabrics for clothes F2 and F3, the same signs are used for the same configurations as those of the fabric for clothes F1, and the overlapping description will be omitted.

As shown in FIG. 2, the fabric for clothes F2 has a multilayer structure including the first layer L1, the second layer L2, and the third layer L3. In the fabric for clothes F2, the base material layer L3b of the third layer L, the adhesive layer L3a of the third layer L3, the base material layer L1b of the first layer L1, the adhesive layer L1a of the first layer L1, and the second layer L2 are stacked in this order from the bottom to the top. That is, in the fabric for clothes F2, the third layer L3 is attached to the first layer L1 side, which is one of the first layer L1 and the second layer L2. This point is different from the fabric for clothes F1.

The third layer L3 is coated with a treatment agent for improving the warmth retaining property of the fabric for clothes F2. The third layer L3 may be colored in the same manner as the fabric for clothes F1. When the fabric for clothes F2 is processed into clothes, the third layer L3 is preferably used on the outer side of the clothes from the viewpoint of the warmth retaining property of the clothes.

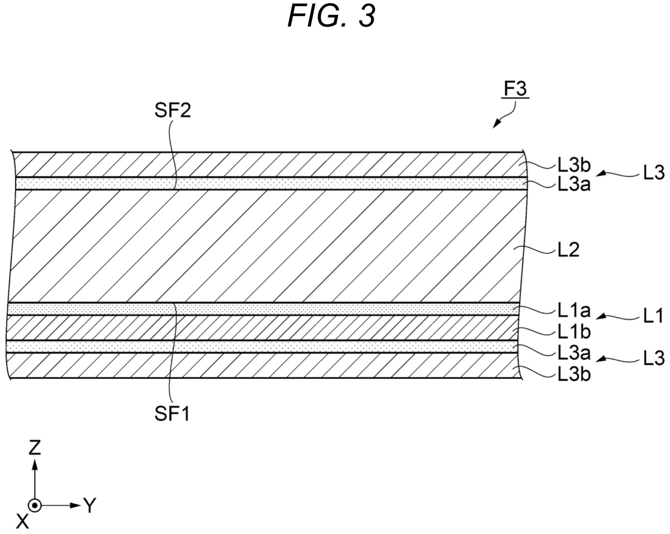

As shown in FIG. 3, the fabric for clothes F3 has a multilayer structure including the first layer L1, the second layer L2, and two third layers L3. In the fabric for clothes F3, the base material layer L3b of the third layer L, the adhesive layer L3a of the third layer L3, the base material layer L1b of the first layer L1, the adhesive layer L1a of the first layer L1, the second layer L2, the adhesive layer L3a of the third layer L3, and the base material layer L3b of the third layer L3 are stacked in this order from the bottom to the top. That is, in the fabric for clothes F3, the third layer L3 is attached to both the first layer L1 and the second layer L2, that is, the first layer L1 side and the second layer L2 side. This point is different from the fabric for clothes F1.

The two third layers L3 are respectively coated with a treatment agent for improving the warmth retaining property of the fabric for clothes F3. Therefore, the fabric for clothes F3 has the improved warmth retaining property with respect to the fabrics for clothes F1 and F2. The warmth retaining property can be adjusted by changing the arrangement and the number of the third layers L3 with respect to the first layer L1 and the second layer L2.

Both or one of the two third layers L3 may be colored in the same manner as the fabric for clothes F1.

### 2. Method of Manufacturing Fabric for Clothes

A method of manufacturing the fabric for clothes F1 according to the present embodiment is an example of the method of manufacturing a fabric for clothes of the present disclosure. The method of manufacturing the fabric for clothes F1 is an example, and is not limited to the following configuration and order. The method of manufacturing the fabric for clothes F1 is also applicable to the manufacture of the fabrics for clothes F2 and F3.

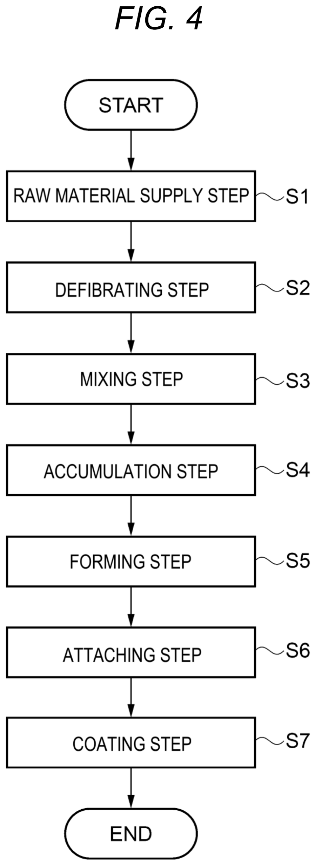

As shown in FIG. 4, the method of manufacturing the fabric for clothes F1 includes a raw material supply step S1, a defibrating step S2, a mixing step S3, an accumulation step S4, a forming step S5, an attaching step S6, and a coating step S7. In the method of manufacturing the fabric for clothes F1, the fabric for clothes F1 is manufactured through the respective steps in the order from the upstream raw material supply step S1 to the downstream coating step S7.

A specific example of the method of manufacturing the fabric for clothes F1 will be described together with a fabric manufacturing apparatus 1 for manufacturing the fabric for clothes F1. The fabric manufacturing apparatus 1 of the present embodiment is an example, and is not limited to the following configuration. In the fabric manufacturing apparatus 1, the end in a transport direction of the raw material, the fabric, the web, the product-in-process, and the like may be referred to as downstream, and the opposite side to the transport direction may be referred to as upstream.

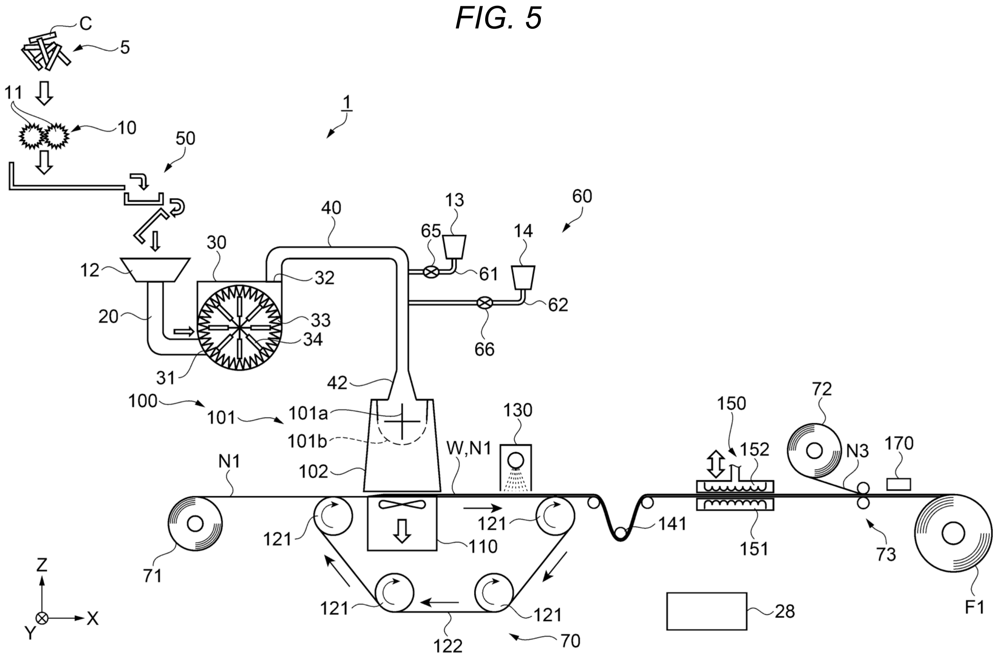

As illustrated in FIG. 5, the fabric manufacturing apparatus 1 includes a supply unit 5, a crushing unit 10, a defibrating unit 30, a mixing unit 60, an accumulation unit 100, a web transport unit 70, a forming unit 150, an attaching unit 73, a treatment unit 170, and the like from upstream to downstream. The fabric manufacturing apparatus 1 also includes a control unit 28 that integrally controls the operation of the above configurations.

The raw material supply step S1 is performed in the supply unit 5. The supply unit 5 supplies a raw material C to the crushing unit 10. The supply unit 5 includes, for example, an automatic feeding mechanism (not illustrated), and continuously and automatically feeds the raw material C into the crushing unit 10. The raw material C is a fabric of used clothes or the like.

The crushing unit 10 shreds the raw material C supplied from the supply unit 5 in an atmosphere such as the air into small pieces. The crushing unit 10 is, for example, a shredder or a cutter mill having crushing blades 11. The raw material C is shredded by the crushing blades 11 into small pieces of the raw material C. The planar shape of the small piece is, for example, a several-millimeter-square shape or an irregular shape. The small pieces are collected in a fixed quantity feed unit 50. The raw material C may be shredded in advance before being fed into the supply unit 5.

The fixed quantity feed unit 50 measures the small pieces of the raw material C and feeds a fixed quantity to a hopper 12. The fixed quantity feed unit 50 is, for example, a vibration feeder. The small pieces of the raw material C fed to the hopper 12 are transported within a pipe 20 and reach an introduction port 31 of the defibrating unit 30. Then, the process proceeds to the defibrating step S2.

The defibrating step S2 is performed in the defibrating unit 30. The defibrating unit 30 defibrates the small pieces derived from the raw material C as the fabric in a dry condition to generate and extract fibers contained in the raw material C. The defibrating unit 30 includes the introduction port 31, an ejection port 32, a stator 33, a rotor 34, and an airflow generation mechanism (not illustrated). The small pieces of the raw material C are introduced into the defibrating unit 30 via the introduction port 31 by the airflow of the airflow generation mechanism.

The stator 33 and the rotor 34 are disposed inside the defibrating unit 30. The stator 33 has a substantially cylindrical inner surface. The rotor 34 rotates along the inner surface of the stator 33. The small pieces of the raw material C are sandwiched between the stator 33 and the rotor 34 and are defibrated by a shearing force generated therebetween.

The fibers generated by the defibrating unit 30 are ejected from the ejection port 32 into a pipe 40. The pipe 40 communicates with the inside of the defibrating unit 30 and the inside of the accumulation unit 100. The fibers are transported from the defibrating unit 30 to the accumulation unit 100 by the airflow generated by the airflow generating mechanism. The mixing unit 60 is provided in the pipe 40 between the defibrating unit 30 and the accumulation unit 100.

Although not illustrated, the fabric manufacturing apparatus 1 may include a sorting mechanism that removes impurities and the like contained in the defibrated fibers between the defibrating unit 30 and the mixing unit 60. Examples of the sorting mechanism include known devices such as a sieve. According to the sorting mechanism, the content of impurities is reduced, and fibers having high purity can be used as the material of the second layer L2. Then, the process proceeds to the mixing step S3.

The mixing step S3 is performed in the mixing unit 60. The mixing unit 60 mixes the fibers obtained in the defibrating step S2 with an additive such as a binder to generate a mixture. The mixing unit 60 includes hoppers 13, 14, supply pipes 61, 62, and valves 65, 66. In the mixing unit 60, the fibers, the binder, and the like are mixed in the air to form a mixture. As described above, the mixture preferably contains no coloring material. The phrase "contains no coloring material" means that a coloring material such as a pigment is not intentionally added to the mixture. That is, the mixture may contain a coloring material such as a dye permeating the fiber or a coloring material unintentionally mixed.

The hopper 13 communicates with the inside of the pipe 40 via the supply pipe 61. In the supply pipe 61, the valve 65 is provided between the hopper 13 and the pipe 40. The hopper 13 supplies the binder into the pipe 40. The valve 65 adjusts the mass of the binder supplied from the hopper 13 to the pipe 40. Thus, the mixing ratio of the fibers and the binder is adjusted. The binder may be supplied in the form of powder or particles, or may be melted and supplied.

The hopper 14 communicates with the inside of the pipe 40 via the supply pipe 62. In the supply pipe 62, the valve 66 is provided between the hopper 14 and the pipe 40. The hopper 14 supplies an additive other than the binder into the pipe 40. The valve 66 adjusts the mass of the additive other than the binder supplied from the hopper 14 to the pipe 40. Thus, the mixing ratio of the additive to the fiber and the binder is adjusted. Note that an additive other than the binder may be mixed with the binder in advance and supplied from the hopper 13. When an additive other than the binder is not added to the mixture, the hopper 14, the supply pipe 62, and the valve 66 may be omitted.

The fibers, the binder, and the like are mixed while being transported through the pipe 40 to the accumulation unit 100 to form a mixture. In order to promote the production of the mixture in the pipe 40 and improve the transportability of the mixture, a blower or the like that generates an air flow may be disposed in the pipe 40. The mixture is introduced from the pipe 40 into the accumulation unit 100 via a coupling portion 42. Then, the process proceeds to the accumulation step S4.

The accumulation step S4 is performed in the accumulation unit 100. The accumulation unit 100 accumulates the mixture on a fabric N1 having air permeability in the air to produce a web W to be the second layer L2. The fabric N1 becomes the first layer L1 of the fabric for clothes F1. That is, the web W is formed by accumulating the mixture containing the defibrated fibers and the additive on the fabric N1 to be the first layer L1 in the air. This makes it easy to form the web W and change the basis weight.

The accumulation unit 100 includes a drum unit 101, a housing unit 102 that houses the drum unit 101, and a fabric supply unit 71 that supplies the fabric N1. The accumulation unit 100 takes the mixture into the drum unit 101 from the pipe 40. Then, the mixture is accumulated in a dry condition on the fabric N1 supplied from the fabric supply unit 71.

The web transport unit 70 including a mesh belt 122 and a suction mechanism 110 is disposed below the accumulation unit 100. The suction mechanism 110 is disposed to face the drum unit 101 with the mesh belt 122 in between in the direction along the Z axis.

The drum unit 101 includes a blade member 101a rotationally driven by a motor (not illustrated), and a substantially cylindrical sieve portion 101b disposed to mainly cover the lower side of the blade member 101a. The blade member 101a loosens the entangled fibers while rotating. The sieve portion 101b allows particles such as fibers or a mixture smaller than the size of the mesh of the sieve to pass from the inside to the outside. As a result, in the mixture, the fibers entangled in the drum unit 101 are loosened and dispersed in the air in the housing unit 102.

The fabric supply unit 71 continuously feeds the rolled fabric N1 onto the mesh belt 122. The adhesive layer L1a of the fabric N1 faces upward. Accordingly, the adhesive layer L1a and the web W come into contact with each other. When a release paper is attached to the adhesive layer L1a of the fabric N1, the fabric supply unit 71 may include a mechanism for separating the release paper from the fabric N1. The fabric N1 may be colored in advance.

The mixture containing the fibers is dispersed from the inside of the sieve portion 101b into the air in the housing unit 102. Then, the mixture containing the fibers is randomly accumulated above the fabric N1 being transported on the mesh belt 122. Therefore, the fibers are less likely to be oriented in a specific direction in the web W.

The sieve portion 101b may not have a function of sorting large fibers and the like in the mixture. That is, the drum unit 101 may loosen the fibers of the mixture and release the entire mixture into the housing unit 102. The mixture dispersed in the air in the housing unit 102 is accumulated on the upper surface of the fabric N1 by gravity and the suction force of the suction mechanism 110.

The basis weight of the fabric for clothes F1 is adjusted by the basis weights of the fabric N1, a fabric N3 described later, and the web W. The basis weight of the web W is adjusted by the number of rotations of the blade member 101a, the supply amount per unit time of the mixture to the accumulation unit 100, the transport speed of the fabric N1 by the mesh belt 122, and the like.

Here, in the accumulation step S4, the thickness of the second layer L2 of the fabric for clothes F1 may be adjusted by changing the thickness of the web W. As a result, the amount of air contained in the second layer L2 changes, and the warmth retaining property of the second layer L2 changes. Therefore, the warmth retaining property can be adjusted in the second layer L2 in addition to the third layer L3, and the warmth retaining property of the fabric for clothes F1 can be more easily adjusted. The thickness of the web W can be adjusted by the basis weight of the web W, the pressure during pressurization in the forming step S5, and the like.

The mixing ratio of the fibers and the additive is not particularly limited, and is appropriately adjusted according to the type of the additive. For example, in the web W, the mass ratio of the fibers to the binder is preferably in a range from 9:1 to 5:5. This makes it possible to balance various physical properties of the fabric for clothes F1.

The web transport unit 70 includes the mesh belt 122 and the suction mechanism 110. The web transport unit 70 promotes the accumulation of the mixture on the fabric N1 by the suction mechanism 110. Further, the web transport unit 70 transports the web W formed of the mixture downstream by the rotation of the mesh belt 122.

The suction mechanism 110 is disposed below the drum unit 101. The suction mechanism 110 suctions the air in the housing unit 102 through a plurality of holes of the mesh belt 122 and the fabric N1 having air permeability. Accordingly, the mixture released to the outside of the drum unit 101 is suctioned downward together with the air and accumulated on the upper surface of the fabric N1. A known suction device such as a blower is adopted as the suction mechanism 110.

Air passes through the plurality of holes of the mesh belt 122, but the fibers, the binder, and the like contained in the mixture are hard to pass the holes. The mesh belt 122 is an endless belt and is looped with tension by four tension rollers 121.

The upper surface of the mesh belt 122 moves downstream by the rotation of the tension rollers 121 themselves. In other words, the mesh belt 122 rotates clockwise in FIG. 4. When the mesh belt 122 is rotated by the tension rollers 121, the mixture is continuously accumulated on the fabric N1 to form the web W. The web W contains a relatively large amount of air and is soft and puffed. The web W is transported downstream together with the fabric N1 as the mesh belt 122 moves.

A humidifier 130 may be disposed downstream of the accumulation unit 100 to spray water onto the web W for humidification. As a result, scattering of the fibers, the binder, and the like contained in the web W is suppressed. Further, the water used for humidification may contain a water-soluble additive, and the web W to be the second layer L2 may be subjected to a surface treatment in parallel with the humidification.

The web W and the fabric N1 are transported downstream by the mesh belt 122, separated from the mesh belt 122, and drawn toward a dancer roller 141. The dancer roller 141 is provided to secure the processing time of the downstream forming step S5. Specifically, since the forming step S5 is to perform batch processing, the processing time of the forming step S5 is secured by moving the dancer roller 141 up and down with respect to the web W and the fabric N1 continuously supplied from the accumulation unit 100. The web W and the fabric N1 are fed downstream via the dancer roller 141. Then, the process proceeds to the forming step S5.

The forming step S5 is performed in the forming unit 150. The forming unit 150 stacks the fabric N1 to be the first layer L1 and the web W, and heats and pressurizes to form. The forming unit 150 is a hot press device and includes an upper plate 152 and a lower plate 151. The upper plate 152 and the lower plate 151 sandwich and pressurize the web W and the fabric N1 therebetween, and heat the web W and the fabric N1 by a built-in heater. In the forming step S5, the forming step S5 may be continuously performed using a heating roller pair or the like.

The web W is compressed from upside and downside by pressurization and the density thereof increases, and the binder is melted by heating and spread between the fibers. When the heating is completed in this state and the binder is solidified, the fibers are bonded to one another by the binder. Further, the fabric N1 and the web W adhere to each other, the fabric N1 becomes the first layer L1, and the web W becomes the second layer L2.

The conditions of pressurization and heating in the forming unit 150 are appropriately adjusted according to the desired density of the fabric for clothes F1, the melting point or curing temperature of the binder, and the like. Although not particularly limited, for example, the pressurization condition is a pressure of 0.01 MPa or more, and the heating condition is a temperature of 90°C or more.

In the forming step S5, the thickness of the second layer L2 may be adjusted by changing the pressure during the pressurization of the forming unit 150. Accordingly, the density of the voids in the second layer L2 changes, and the warmth retaining property in the second layer L2 can be adjusted.

In the forming unit 150, the first layer L1 and the second layer L2 are integrally formed from the fabric N1 and the web W. Then, the process proceeds to the attaching step S6.

In the attaching step S6, the fabric N3 to be the third layer L3 is attached to at least one of the first layer L1 and the second layer L2. In the fabric for clothes F1, the third layer L3 is attached to the second layer L2. Therefore, in the attaching step S6, the fabric N3 to be the third layer L3 is attached to the upper surface of the second layer L2. The fabric N3 includes the adhesive layer L3a and the base material layer L3b (not illustrated). The fabric N3 may be colored in advance similarly to the fabric N1.

The attaching step S6 is performed in a fabric supply unit 72 and the attaching unit 73. The fabric supply unit 72 continuously feeds the rolled fabric N3 above the second layer L2. The adhesive layer L3a of the fabric N3 faces downward, and the adhesive layer L3a and the second layer L2 are brought into contact with each other. When a release paper is attached to the adhesive layer L3a of the fabric N3, the fabric supply unit 72 may include a separation mechanism that separates the release paper from the fabric N3.

The attaching unit 73 attaches the upper surface of the second layer L2 to the adhesive layer L3a of the fabric N3. The attaching unit 73 is a pressure roller pair, and sandwiches and bonds the first layer L1, the second layer L2, and the fabric N3 from upside and downside with pressure. Thus, the third layer L3 of the fabric for clothes F1 is formed. The fabric N3 and the second layer L2 may be bonded to each other by thermal compression bonding using a heating mechanism provided in the attaching unit 73.

Here, when the fabric for clothes F2 described above is manufactured, the fabric N3 is attached from below the first layer L1. Further, when the fabric for clothes F3 described above is manufactured, the fabric N3 is attached to both the lower side of the first layer L1 and the upper side of the second layer L2. Then, the process proceeds to the coating step S7.

The coating step S7 is performed in the treatment unit 170. The treatment unit 170 coats the third layer L3 with a treatment agent that improves the warmth retaining property. The treatment unit 170 is, for example, a spray device, and sprays a solution of the treatment agent to coat the third layer L3. The method used in the treatment unit 170 is not limited to the spraying method, and may be a known method such as dropping, inkjet, or roller coating.

A part of the solution of the treatment agent applied to the third layer L3 permeates the base material layer L3b, and the rest remains on the surface of the base material layer L3b. Thereafter, the volatile component of the solution of the treatment agent is volatilized, and a coating layer of the treatment agent is formed on the surface and inside of the base material layer L3b. The volatilization of the volatile component may be air drying or evaporation by a blowing mechanism or a heating mechanism (not illustrated).

In the coating step S7, the third layer L3 is coated with the treatment agent. As the treatment agent, a resin solution or emulsion for forming a resin coating, a slurry or powder containing a latent heat storage material, or the like is applied. The coating method is not limited to the spraying method, and can be changed to roller coating, inkjet coating, or the like according to the properties of the treatment agent.

Examples of the treatment agent for forming the resin coating include emulsions of a urethane resin, an acrylic resin, and the like, curable monomers having thermosetting properties, electron beam curing properties, and the like, and curing agents thereof. A commercially available product may be used as the treatment agent. According to the configuration, the resin coating formed from the treatment agent enhances the sealing property of the fabric for clothes F1 and suppresses the entry of cold air from the outside and the release of hot air at the human body side. Therefore, the warmth retaining property of the third layer L3 can be further improved.

Examples of the treatment agent using latent heat include a treatment agent containing a known latent heat storage material such as a fatty acid compound or paraffin. As the latent heat storage material, a commercially available product such as a thermal storage paraffin PCM series manufactured by MIKILIKEN INDUSTRIAL and Conformer (registered trademark) manufactured by SUMITOMO CHEMICAL may be used. According to the configuration, the heat stored in the coating layer is released, and the temperature decrease at the human body side is suppressed. Therefore, the warmth retaining property of the third layer L3 can be further improved.

The surface of the third layer L3, that is, the coating layer of the base material layer L3b may be colored with pigment ink or the like. By coloring the surface of the coating layer, the color developing property of coloring and the like are improved as compared with the case where the fabric N3 is colored in advance. The coloring of the third layer L3 is not limited to coloring the entire surface of the third layer L3 with a single color, and may be forming an image such as a text, a pattern, a picture, or a photograph.

A coloring device for coloring the third layer L3 is not particularly limited, and examples thereof include known devices such as an ink ejection device and an ink coating device. For high-mix low-volume production of the fabric for clothes F1, it is preferable to apply an ink ejection device including an inkjet head. As a preliminary step of coloring, the coating layer of the third layer L3 may be pretreated. The pretreatment improves, for example, abrasion resistance and color fastness to washing of the clothes processed from the fabric for clothes F1.

A cutting unit (not illustrated) may be provided downstream of the treatment unit 170 to adjust the shape of both ends of the fabric for clothes F1 in a direction along the Y axis. Specifically, the cutting unit includes a longitudinal blade. The longitudinal blade cuts the band-shaped fabric for clothes F1 along the transport direction. As a result, the both ends of the fabric for clothes F1 are cut and aligned. The cutting unit may be disposed between the attaching unit 73 and the treatment unit 170.

The fabric for clothes F1 is coated in the coating step S7, and then wound into a roll by a winding mechanism (not illustrated). Thus, the fabric for clothes F1 is manufactured.

According to the present embodiment, the following effects can be obtained.

The warmth retaining property of the fabric for clothes F1 to be manufactured can be adjusted. Specifically, by attaching the fabric N3 to be the third layer L3 to the second layer L2 and coating the third layer L3 with the treatment agent, the warmth retaining property is adjusted to be improved as compared with a case without coating with the treatment agent. Further, in the fabric for clothes F3, the fabric N3 to be the third layer L3 is attached to both the first layer L1 and the second layer L2, and both of the third layers L3 are coated with the treatment agent, thereby further improving the warmth retaining property. As a result, the warmth retaining property changes depending on whether the third layer L3 is attached to one or both of the first layer L1 and the second layer L2. Therefore, it is possible to provide a method of manufacturing a fabric for clothes with adjustment of the warmth retaining property.

The warmth retaining properties can be adjusted in the fabrics for clothes F1, F2, and F3 to be manufactured. Specifically, by attaching the fabric N3 to be the third layer L3 to the second layer L2 and coating the third layer L3 with the treatment agent, the warmth retaining property is adjusted to be improved as compared with a case without coating with the treatment agent. Further, in the fabric for clothes F3, the fabric N3 to be the third layer L3 is attached to both the first layer L1 and the second layer L2, and both of the third layers L3 are coated with the treatment agent, thereby further improving the warmth retaining property. As a result, the warmth retaining property changes depending on whether the third layer L3 is attached to one or both of the first layer L1 and the second layer L2. Therefore, it is possible to provide the fabrics for clothes F1, F2, and F3 with adjusted warmth retaining properties.

## Claims

1. A method of manufacturing a fabric for clothes comprising:
a defibrating step of defibrating a fabric in a dry condition to produce fibers;
a mixing step of mixing an additive with the fibers obtained in the defibrating step to produce a mixture;
an accumulation step of accumulating the mixture in air on a fabric to be a first layer having air permeability to produce a web to be a second layer;
a forming step of stacking the fabric to be the first layer and the web and forming by heating and pressurizing;
an attaching step of attaching a fabric to be a third layer to at least one of the first layer and the second layer; and
a coating step of coating the third layer with a treatment agent for improving a warmth retaining property.

2. The method of manufacturing a fabric for clothes according to claim 1, wherein
in the coating step, coating is performed with a latent heat storage material as the treatment agent.

3. The method of manufacturing a fabric for clothes according to claim 1, wherein
in the coating step, a resin coating is formed on the third layer by the treatment agent.

4. The method of manufacturing a fabric for clothes according to claim 1, wherein
a thickness of the second layer is adjusted by changing a thickness of the web in the accumulation step.

5. The method of manufacturing a fabric for clothes according to claim 1, wherein
in the forming step, a thickness of the second layer is adjusted by changing a pressure during pressurization.

6. A fabric for clothes comprising:
a first layer having air permeability;
a second layer formed of a web in which a mixture containing fibers obtained by defibrating a fabric in a dry condition and an additive is accumulated in air; and
a third layer attached to at least one of the first layer and the second layer and coated with a treatment agent for improving a warmth retaining property.
